# EUROPEAN PATENT SPECIFICATION

(11) **EP 1 558 533 B1**
(45) Date of publication and mention of the grant of the patent: **10.01.2018**
(21) Application number: 03775307.6
(22) Date of filing: 06.11.2003
(51) Int. Cl.: C03B 5/00, C03C 13/06, C03C 1/02, C03C 1/00, C03C 3/097

(54) **PROCESSES OF FORMING MINERAL FIBRES**
VERFAHREN ZUR HERSTELLUNG VON MINERALFASERN
PROCEDES DESTINES A FORMER DES FIBRES MINERALES

(30) Priority: 06.11.2002 DE 10252000; 06.06.2003 EP 03253600
(43) Date of publication of application: 03.08.2005
(73) Proprietor: Rockwool International A/S, 2640 Hedehusene (DK)
(72) Inventor: HANSEN,Peter, Farkas, Binderup, DK-3520 Farum (DK); NYKIEL, Guido, 45964 Gladbeck (DE); LEISMANN, Andreas, 44795 Bochum (DE)
(74) Representative: Gill Jennings & Every LLP
(86) International application number: PCT/EP2003/012373
(87) International publication number: WO 2004/041735

(56) References cited:
- EP-A- 0 468 414
- WO-A-00/76929
- WO-A-01/42154
- WO-A-95/29135
- WO-A-96/28395
- WO-A-98/40321
- GB-A- 2 301 351
- US-A- 2 300 930
- PATENT ABSTRACTS OF JAPAN vol. 2000, no. 07, 29 September 2000 (2000-09-29) & JP 2000 109338 A (AOKI YUTAKA), 18 April 2000 (2000-04-18)

## Description

This invention relates to processes for production of man-made vitreous fibres (MMVF) which contain phosphorus.

It is well known to produce man-made vitreous fibres, often described as mineral fibres, by providing a charge of mineral material, melting the charge in a furnace and fiberising the resulting melt to form fibres. The fibres can be used for a variety of purposes, including heat and sound insulation, fire protection, as growth substrates, etc.

The final composition of the fibres is generally expressed in terms of oxides of elements contained in the fibres and it is well established that the composition of the charge of mineral materials, and hence the composition of the melt and the final fibres, can influence the properties of the final fibres.

In particular, it has been well established for some years that a content of phosphorus P₂O₅ in the fibres can have a positive influence on the properties of the melt and the fibres under certain circumstances. For instance, a number of patent publications have focused on the fact that content of P₂O₅ in the fibres can improve the biosolubility of the fibres and hence the level of biological safety which can be attributed to such fibres.

However, only a relatively narrow range of materials has been suggested as suitable raw materials for inclusion in a charge which can contribute P₂O₅ to the final fibres. For instance, WO 99/08970 suggests apatite.

WO 95/29135 discloses that the inclusion of P₂O₅ and B₂O₃ in a composition improves the production characteristics and physiological dissolution rates of mineral wool fibres. Calcium phosphate is disclosed as a phosphorus-containing raw material.

WO 98/40321 discloses mineral fibres having a composition which comprises from 1 to 6% P₂O₅. Apatite and synthetic phosphate are suggested as phosphorus-containing raw materials.

EP-A-459897 discloses fibres having 1 to 10% P₂O₅ content, and phosphorus pentoxide is disclosed as a suitable phosphorus source.

US 5198190 generally suggests use of industrial wastes to produce mineral wool. However, it is specifically stated that phosphorus is removed from the waste prior to formation into mineral wool. Indeed, none of the wastes used appears to contain phosphorus.

US 5496392 is similar in that it concerns production of products such as mineral wool from industrial waste materials after removal of valuable metals, metal alloys and metal oxides. However, again no wastes are discussed which contain significant levels of phosphorus. Use of second cut spent pot liner (SPL) is mentioned but the maximum content of phosphorus in this waste is 0.20%.

EP-A-009418 generally discloses a glass wool composition which can contain up to 4% P₂O₅ and suggests industrial wastes in general but does not specifically mention phosphorus-containing waste materials and indeed no specific examples are given of fibres containing P₂O₅.

SU 1785520 describes treatment of blast furnace slag to form an alloy and a secondary slag, which is said to have a P₂O₅ content of up to 27%, and which can be used for the production of mineral wool.

GB-A-2,301,351 suggests that P₂O₅ can be provided by unrefined ore such as unrefined pyroxenite, or industrial waste products. Converter slag and waste mineral wool are suggested.

EP-A-468,414 describes production of paper made from slag wool. Thus it is not concerned with producing mineral wool for subsequent use in the applications generally known for mineral wool. The method involves taking dewatered sludge and, generally, adding the sludge to a cyclone furnace in which the sludge is combusted to sludge ash. The sludge ash is then melted to form a liquid sludge slag which is formed into mineral wool. Although this is the usual method described, it is also suggested that sludge ash can be preformed by burning dried ash in an incinerator and then adding the resulting product, together with a calcium content adjusting agent, to the melting furnace.

In practice the preferred material for inclusion of phosphorus is the virgin rock apatite. The most commonly used form of apatite is fluoro apatite, which consequently brings halogens into the process, which must often be dealt with to avoid release of undesirable waste materials during production. Chloro apatite is also used and leads to similar problems, as well as the potential for corrosion of the apparatus.

Thus it can be seen that although there have for some years been suggestions that phosphorus should be included as a component of mineral fibres, there remains a need for provision of raw materials which can bring suitable P₂O₅ content into the fibres, without the need for potentially expensive raw materials and without the need for materials which inevitably bring with them components such as halogens, which can be undesirable in some applications.

Furthermore, the virgin rock apatite tends to result in less than 100% of the phosphorus in the apatite making its way into the melt and, hence, the final fibres. The proportion of phosphorus in the apatite which ends up in the fibres can be below 90%. This has the potential disadvantage that the properties of the final fibres associated with the phosphorus content may not be as good as desired. This may include, for instance, biosolubility, especially in fibres which have rather low content of alumina. It may also include processing properties such as elasticity, especially in fibres which have rather high content of alumina. Furthermore, the phosphorus which does not transfer to the melt can transfer to the molten iron slag released from the furnace, in cases where a cupola furnace is used. This has the disadvantage that the byproduct is less desirable for recycling to iron production plants than it would otherwise be, because phosphorus tends to induce brittleness as a component of steel.

Thus according to a invention we provide a process of producing man-made vitreous fibres having a phosphorus content of at least 0.5%, measured as weight % P₂O₅, comprising providing a charge of mineral material which includes briquettes, melting the charge in a furnace to provide a melt and fiberising the melt to form fibres, wherein the briquettes comprise a non-virgin rock material comprising at least 2% phosphorus. The non-virgin rock material is an ash material selected from sewage sludge ash, bone meal ash, granulated sewage sludge slag and mixtures thereof.

We have found that these materials are suitable for inclusion in briquettes for the production of mineral fibres and provide an appropriate level of phosphorus, at levels of ash which can conveniently be incorporated. An advantage of use of these ash raw materials is the possibility of avoidance of introduction of halogens into the process.

A further advantage of use of these ash raw materials, especially sewage sludge ash, over standard preferred phosphorus-containing materials such as apatite, is that they can result in transfer of a greater percentage of the phosphorus in the raw material into the final fibres. For instance, the proportion of phosphorus in the charge which ends up in the melt and fibres can be at least 90%, and even at least 92% or 95%. Small increases in this percentage can be significant in practice, especially in terms of the proportion of phosphorus which is a resultant impurity in the iron slag tapped from the furnace.

Furthermore, use of these materials solves a further problem concerning their disposal. This is applicable to sewage sludge in particular. Generation of sewage sludge is a global environmental problem. At present there are few solutions for disposal of sewage sludge, but combustion to sewage sludge ash is one of the primary methods. However, the remaining ash has heavy metal content and is therefore not easily disposed of as, for instance, fertiliser, since the heavy metal content deters use by farmers. Therefore the most common solution for disposal of sewage sludge ash in many countries is landfilling, which is often a costly solution. Use of sewage sludge ash has the further advantage of introducing iron oxide into the melt, which can impart fire resistance to the final fibres and can control the viscosity of the melt, and calcium oxide, which can control the viscosity of the melt.

Consequently, the present invention finds, as well as a novel, beneficial and economical material for the provision of phosphorus-containing MMVF, a solution to the problem of disposal of sewage sludge ash, as well as other waste materials such as bone meal ash.

The uses for sewage sludge ash which have been disclosed previously are relatively limited and include use as a component of bricks and inclusion in cement mortar, as well as use in production of paper.

It is particularly surprising that it is possible to use sewage sludge ash, bone meal ash and certain other phosphorus-containing materials in certain classes of fibre production processes. These materials are usually available in small particle size form and consequently in processes in which the furnace is a shaft furnace it is not possible to include such ash materials in the charge in significant amounts in the form as received. Instead, it is generally accepted as necessary to include them as a component of a briquette. However, it has also generally been accepted that inclusion of significant levels of phosphorus-containing materials in briquettes would be expected to have detrimental effects on the strength of the briquettes. It is important for processing reasons that briquettes should have adequate strength but this is particularly important in a shaft furnace where the briquettes form part of a stack of mineral materials.

However, surprisingly it has now been found that it is possible to include the phosphorus-containing waste ash materials described above, in briquettes whilst maintaining adequate briquette strength.

In this specification, all amounts of fibre components are expressed as weight %, measured as the relevant oxide, unless otherwise stated.

The invention can be used to produce a variety of types of man-made vitreous fibre, including rock fibres and glass fibres.

Glass fibres traditionally contain relatively low total amounts of alkaline earth metal and iron (calcium, magnesium and iron), generally below 12% measured as total oxides (iron being measured as FeO).

Rock fibres generally contain at least 15%, usually more than 20%, total calcium, magnesium and iron oxides. Rock fibres preferably contain at least 1%, often at least 3% and frequently 5 to 12% iron measured as FeO.

The fibres generally contain SiO₂ in an amount of from 30 to 70%.

The invention is particularly useful in the production of fibres which can be shown to be soluble in physiological saline. Some such fibres contain a relatively low amount of aluminium, for instance not more than 4%, optionally together with 1 to 5% boron. Typical of these low aluminium fibres are the disclosures in, for instance, EP-A-459897 and in WO 92/09536, WO 93/22251 and WO 96/00196. In these fibres it is believed that the use of the raw materials specified can have the advantage of improving biosolubility over the use of apatite as a raw material containing the same level of phosphorus.

The invention can also be applied to the production of fibres which have higher aluminium content, for instance at least 15% and even at least 17% and in certain cases at least 18% Al₂O₃, eg. up to 30, 35 or 40% Al₂O₃. Suitable high aluminium, biologically soluble fibres which can be advantageously made in the present invention are described in WO 96/14454 and WO 96/14274. Others are described in WO 97/29057, DE-U-2970027, WO 97/30002 and WO99/08970. In these fibres it is believed that the raw material specified, especially sewage sludge ash, can have advantages associated with introduction of a greater proportion of the phosphorus in the raw material into the fibres, such as improved elasticity of the fibres and improved viscosity of the melt. The invention also allows maintenance of the biosolubility within acceptable ranges.

Of course, in the invention it is essential that the fibres contain at least 0.5% phosphorus in addition to the components discussed in these compositions.

In general the fibres and the melt from which they are formed have an analysis within the various ranges defined by the following preferred lower and upper limits:
SiO₂ at least 30, 32, 35 or 37; not more than 51, 48, 45 or 43
Al₂O₃ at least 12, 14, 15, 16 or 18; not more than 35, 30, 26 or 23 (alternatively, Al₂O₃ not more than 4%).
CaO at least 8 or 10; not more than 30, 25 or 20
MgO at least 2 or 5; not more than 25, 20, 15 or 12
FeO (including Fe₂O₃) at least 2, 3 or 5; not more than 15, 12, 10 or 8
FeO + MgO at least 8, 10, 12; not more than 25, 20, 15
Na₂O + K₂O zero or at least 1 or 2; not more than 10 or 8
CaO + MgO at least 20, 25, 30; not more than 45, 40
TiO₂ zero or at least 1; not more than 4, 2
TiO₂ + FeO at least 4, 6; not more than 12, 10
B₂O₃ zero or at least 1; not more than 5, 3
Others zero or at leash 1; not more than 8, 5

The MMV fibres have a phosphorus content, measured by weight as P₂O₅, of at least 0.5%. P₂O₅ content can be up to 10% but is often not more than 5 or 6% and can preferably be in the range 0.5 to 4%.

One preferred class of fibre for production in the invention comprises from 16 to 18 wt.% Al₂O₃. Preferably such fibres are formed from a melt which has viscosity at 1400°C from 15 to 17 poise. A second class of preferred fibres has content of Al₂O₃ from 12 to 15% and are formed from a melt which has viscosity at 1400°C of from 10 to 14 poise. These classes of fibre preferably contain at least 4 wt.% P₂O₅.

Examples of preferred composition ranges include 35 to 45% SiO₂, 12 to 17.5% Al₂O₃, 15 or 18 to 28% CaO, 5 to 15% MgO, 3 to 8% FeO, 0 to 5% Na₂O plus K₂O, 0 to 3% TiO₂, 0.5 to 5% P₂O₅ and 0 to 1% MnO.

Other preferred fibres have compositions 35 to 42% SiO₂, 12 to 16.5% Al₂O₃, 20 to 24% CaO, 9 to 15% MgO, 3 to 8% FeO, 0 to 5% Na₂O plus K₂O, 0 to 3% TiO₂, 0.5 to 5% P₂O₅, 0 to 1% MnO.

In both of these preferred compositions the melt has a viscosity at 1,400°C not more than 20 poise.

The fibres preferably have a sintering temperature (as defined in WO96/14274) above 800°C, more preferably above 1000°C.

The melt preferably has a viscosity at fibre forming temperature of 2 to 100 poise, preferably 3 to 70 poise, more preferably 10 to 30 poise at 1400°C (as defined in WO96/14274).

The fibres preferably have an adequate solubility in lung fluids as shown by *in vivo* tests or *in vitro* tests, typically conducted in physiological saline buffered to about pH 4.5. Suitable solubilities are described in WO 96/14454. Usually the rate of dissolution is at least 10 or 20nm per day in that saline.

In some compositions it is particularly desirable that the level of aluminium is below 22% or even below 14% and the content of phosphorus is at least 1%. High alumina levels lead to high melt viscosity, which is beneficial for processing purposes - melt viscosity which is too low can lead to processing problems. Thus fibres having relatively low aluminium levels can tend to result in a melt which has a rather low viscosity. Inclusion of phosphorus allows viscosity to be increased, without at the same time compromising biosolubility.

As discussed above, sewage sludge ash has the particular advantage that it can introduce iron and calcium into the melt, which also can control viscosity.

In the process the mineral materials are charged to a furnace. Any of the typical furnaces used for forming MMVF melts can be used. The furnace can be a tank furnace, which includes gas or oil fired tank furnaces, molybdenum and graphite electrode tank furnaces and electric arc furnaces. Preferably, however, the furnace is a shaft furnace in which a stack of granular mineral material is heated and melt drains to the base of the stack as a pool from which it is run off to the fibre forming process. In some instances the melt is run from the base of the stack into another chamber where it collects as a pool and from which it is run off to the fibre forming process. The preferred type of shaft furnace is a cupola.

However, the raw material of the invention can be used in processes in which the furnace is a tank furnace (eg an electric furnace) and in a further aspect of the invention we provide a process of producing man-made vitreous fibres having a phosphorus content of at least 0.5% measured as weight percent P₂O₅, comprising providing a charge of mineral material which includes sewage sludge ash, bone meal ash or a mixture thereof in powder form, melting the charge in a tank furnace to provide a melt and fiberising the melt to form fibres. The fibres are generally used to form a fibrous insulation product (including heat and sound insulation products and fire protection products) or a growth substrate product.

The MMV fibres may be made from the mineral melt in conventional manner. They are generally made by a centrifugal fibre forming process. For instance the fibres may be formed by a spinning cup process in which they are thrown outwardly through perforations in a spinning cup, or melt may be thrown off a rotating disc and fibre formation may be promoted by blasting jets of gas through the melt. Alternatively fibre formation may be conducted by pouring the melt onto the first rotor in a cascade spinner. Preferably the melt is poured onto the first of a set of two, three or four rotors each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

In the invention it is essential that the charge of mineral material comprises a non-virgin rock material as defined above. Preferably it is an ash, selected from sewage sludge ash and bone meal ash.

Any sewage sludge ash may be used in the invention. Preferred sewage sludge ash materials have the following ranges of components, measured as oxides except in the case of chlorine.
SiO₂ 25 to 35%
Al₂O₃ 5 to 15%
TiO₂ 0.5 to 3%
Fe₂O₃ 8 to 20%
CaO 15 to 25%
MgO 0 to 5%, preferably 0.5 to 4%
Na₂O 0 to 3%, preferably 0.1 to 2%
K₂O 0 to 3%, preferably 0.5 to 2%
P₂O₅ 10 to 35%, preferably 14 to 30%, more preferably up to 25%,
MnO₂ 0 to 2%, preferably 0.1 to 1%
ZnO 0 to 2%, preferably 0.1 to 1%
SO₃ 0 to 7%, preferably 2 to 6%
Cl 0 to 2%, preferably 0.1 to 1%.

Generally the sewage sludge ash contains at least SiO₂,Al₂O₃, TiO₂, Fe₂O₃, CaO and P₂O₅, with the remaining components being optional.

Bone meal ash (which can be described alternatively as "meat and bone meal ash") generally has content of oxides as follows:
SiO₂ 5 to 15%
Al₂O₃ 0 to 5%, preferably 0.5 to 4%
FeO 0 to 2%, preferably 0.1 to 1%
CaO 25 to 55%
MgO 0 to 5%, preferably 0.5 to 3%
Na₂O 0 to 4%, preferably 0.5 to 3%
K₂O 0.5 to 6%, preferably 2 to 5%
P₂O₅ 20 to 50%, preferably 30 to 40%
SO₃ 1 to 10%, preferably 2 to 6%.

The charge preferably comprises at least 3 weight %, more preferably at least 4 weight %, most preferably at least 5 weight % of the defined non-virgin rock material. The level of defined non-virgin rock material included in the charge can be up to 25%, but preferably is not more than 20% and can be up to 15%.

Sewage sludge ash is the most preferred ash material for use in the invention.

In the invention the non-virgin rock material is a material which is the waste product of an earlier used process, ie. industrial waste (which would often be sent for disposal).

In the invention the non-virgin rock material is provided in particulate form before incorporation into the briquettes.

When the non-virgin rock material is an ash, particle size is generally at least 90 weight % below 300 microns, preferably at least 75 weight % below 200 microns. Often at least 30%, preferably at least 50%, of the particles have size below 120 microns. Preferably at least 40% of the particles have size below 90 microns. Preferably at least 45% of the particles have size below 75 microns. Preferably at least 60% of the particles have size below 45 microns. However, at least 70% of the particles generally have size above 25 microns.

In some cases, especially when the non-virgin rock material is sewage sludge ash, it is preferred that not more than 40 wt.% of the particles have diameter below 100 *µ*m. Preferably not more than 60% have diameter below 200 *µ*m. More preferably not more than 70% have diameter below 500 *µ*m. Preferably not more than 80% have diameter below 1000 *µ*m.

A further material suitable for use as the non-virgin rock material in the invention is granulated sewage sludge slag. This product is made by heating sewage sludge in a furnace to form a molten slag and granulating the resulting solidified slag. Generally the sewage sludge is degassed and formed into briquettes before introduction into the furnace. The furnace is generally a shaft furnace such as a cupola furnace. An example of such a product is commercially available from the company RGS90 Industri under the name Carbogrit. US 2003/0083187 describes the production of a product of this nature. It describes heat treatment of a raw material comprising sewage sludge ash and other raw materials to form a melt. This melt is quenched in water and forms a granulate. The granulate has particle size of the order of 0.4 to 1.4 mm. The raw materials can be briquetted before the heat treatment and melting takes place. This briquetting is part of the process of producing the granulate itself. There is brief mention that the final granulate can be used for producing "slag wool" but no other details are given.

Granulated sewage sludge slag generally contains the following components:

| **Mineral** | **Generally** | **Example** |
|---|---|---|
| SiO₂ | 40-45 wt.% | 43.4 wt.% |
| Al₂O₃ | 10-18 wt.% | 14.5 wt.% |
| Fe₂O₃ | 5-12 wt.% | 9.2 wt.% |
| CaO | 15-20 wt.% | 18.1 wt.% |
| MgO | 2-8 wt.% | 5.4 wt.% |
| MnO₂ | 0-3 wt.% | 0.1 wt.% |
| TiO₂ | 0-3 wt.% | 0.6 wt.% |
| P₂O₅ | 5-10 wt.% | 7.3 wt.% |
| K₂O | 0-3 wt.% | 0.9 wt.% |
| Na₂O | 0-3 wt.% | 1.0 wt.% |
| SrO | 0-2 wt.% | 0.3 wt.% |
| SO₃ | 0-1 wt.% | 0.03 wt.% |
| Others | 0-2 wt.% | - |

In the invention the briquettes preferably comprise at least 1 or at least 3 weight %, more preferably at least 4 weight % non-virgin rock material. The level can be up to 50% but preferably is not more than 35%, more preferably not more than 25%.

Levels of sewage sludge ash not more than 25%, preferably not more than 20%, can be advantageous. When the non-virgin rock material is granulated sewage sludge slag, the briquettes generally comprise not more than 50%, preferably not more than 35%, more preferably not more than 25% granulated sewage sludge slag.

In the invention the briquettes can be made in standard manner by providing a mixture of granular materials comprising the non-virgin rock material and moulding and compacting these materials, generally in the presence of moisture and a binder. The briquettes are then allowed to cure and harden.

The binder may be any of the known binders for briquettes for use in mineral wool production. Thus the binder may be inorganic, such as cement, in particular Portland cement. Alternatively it may be organic, such as molasses.

The briquettes are usually of standard size, namely having smallest dimension at least 50 mm and largest dimension at least 100 mm.

It is preferred that the moisture content of the briquette composition which is moulded is at least 10%, preferably at least 12%, more preferably at least 15%. Generally it is not more than 25%, preferably not more than 20%. We find that these levels of moisture content assist in obtaining adequate strength values.

It is preferred that the briquette composition comprises waste mineral wool, generally of the same type as that being produced in the process, also in order to improve briquette strength. Preferred amounts are at least 1%, preferably at least 5%, but generally not more than 15%, preferably not more than 10%.

After moulding, the briquettes are allowed to cure before use. Preferably curing is allowed to occur for at least 24 hours, preferably at least 48 hours and more preferably at least 36 hours. In some cases it is preferred that curing lasts at least 72 hours. After curing, the briquettes are then used by inclusion in the charge in the process.

Preferably the briquettes have density at least 1.8 kg/dm³ immediately after production.

In the invention fibres are formed from a melt. This is provided by means of a charge of mineral material including the briquettes. When the furnace is a shaft furnace such as a cupola furnace, fuel is normally also added to the furnace together with the charge of mineral material. This is often in the form of coke, which does not form part of the melt.

The fibres produced according to the processes of the invention can be used for any of the known applications for MMV fibres. For instance they can be used for fire insulation and protection, sound insulation, as growth substrate and in granulated form as a filler.

### Example

Charge 1 below can be used in the invention as the charge which is molten and formed into fibres. Charge 2 is comparative. In Charge 1, at least 90% of the phosphorus in the charge is transferred to the fibres. In Charge 2, the percentage is 87%.

| | | |
|---|---|---|
| Charge 1: | 58% wt. briquette | |
| | 12% stone 1 | |
| | 30% stone 2 | |
| | Briquette: | |
| | 16.5% | Bottom ash from coal fired plant |
| | 10.5% | Cement |
| | 15% | Waste catalyst |
| | 3% | Ash additive |
| | 34% | Recycled fibres |
| | 10% | Bottom slag |
| | 1% | Filter dust |
| | 10% | SSA (sewage sludge ash) (15.9% wt P₂O₅) |
| | P₂O₅ in briquette: 2.0% wt | |
| | SSA composition: | |
| | SiO₂ | 29.5% wt |
| | Al₂O₃ | 11.6 |
| | TiO₂ | 0.6 |
| | Fe₂O₃ | 13.5 |
| | CaO | 18.9 |
| | MgO | 1.7 |
| | K₂O | 1.5 |
| | Na₂O | 0.9 |
| | Mn₂O₄ | 0.2 |
| | P₂O₅ | 15.9 |
| | SO₃ | 0.2 |
| | Rest | 4 |
| | H₂O | 1 |
| Charge 2: | 66% briquette 1 | |
| | 34% briquette 2 | |
| | Briquette 1: | |
| | 12% Cement | |
| | 45% Quartz sand | |
| | 25% Olivine sand | |
| 13% | Converter slag | |
| 5% | Iron ore | |
| P₂O₅in briquette 1: | 0.5% wt. | |
| Briquette 2: | | |
| 12% | Cement | |
| 36% | Apatite | |
| 26% | Quartz sand | |
| 26% | Converter slag | |
| P₂O₅ in briquette 2: | 3.6% wt. | |

## Claims

1. A process of producing man-made vitreous fibres having a phosphorus content of at least 0.5%, measured as weight % P₂O₅, comprising
providing a charge of mineral material which includes briquettes,
melting the charge in a furnace to provide a melt
and fiberising the melt to form fibres,
wherein the briquettes comprise a non-virgin rock material comprising at least 2% phosphorus, the non-virgin rock material being selected from the group consisting of sewage sludge ash, bone meal ash, granulated sewage sludge slag and mixtures thereof.

2. A process according to claim 1 in which the non-virgin rock material comprises at least 3% phosphorus.

3. A process according to claim 2 in which the non-virgin rock material comprises at least 5% phosphorus.

4. A process according to any preceding claim in which the non-virgin rock material comprises sewage sludge ash.

5. A process according to any preceding claim in which the non-virgin rock material comprises granulated sewage sludge slag.

6. A process according to any preceding claim in which the briquettes comprise at least 3% by weight, preferably at least 4% by weight, more preferably at least 5% by weight non-virgin rock material.

7. A process according to any preceding claim in which the briquettes comprise not more than 25%, preferably not more than 15%, more preferably not more than 10%, by weight non-virgin rock material.

8. A process according to claim 1 in which the non-virgin rock material is granulated sewage sludge slag and the briquettes comprise not more than 50 wt.% granulated sewage sludge slag.

9. A process according to claim 1 in which the non-virgin rock material is sewage sludge ash and the charge of mineral material contains from 1 to 25%, preferably from 4 to 15% sewage sludge ash, by weight of charge.

10. A process according to any preceding claim in which the briquettes additionally comprise waste mineral wool.

11. A process according to any preceding claim in which the briquettes are produced at least two days prior to their inclusion in the charge.

12. A process according to any preceding claim in which the fibres comprise less than 22% aluminium, preferably less than 17%, most preferably between 10 and 15% aluminium, measured as weight % Al₂O₃.

13. A process according to any preceding claim in which the fibres comprise from 0.5 to 10% phosphorus, preferably less than 5% phosphorus, measured as weight % P₂O₅.

14. A process according to claim 13 in which the fibres comprise at least 1%, preferably at least 2%, phosphorus.

15. A process according to any preceding claim in which at least 90%, preferably at least 92%, more preferably at least 95%, of the phosphorus in the charge is transferred into the melt and the fibres.

16. A process according to any preceding claim in which the furnace is a shaft furnace, preferably a cupola furnace.

17. A process according to claim 16 in which iron is tapped from the furnace and is preferably reused in an iron foundry.

18. A process according to any preceding claim in which the fibres comprise less than 4% aluminium, measured as weight percent Al₂O₃.

19. A process according to any preceding claim comprising forming the fibres into a product which is an insulation product, a growth substrate or a granulated filler.

20. A process according to claim 19 in which the product is used for sound insulation or fire protection.

## Patentansprüche

1. Verfahren zum Herstellen künstlicher glasartiger Fasern mit einem Phosphorgehalt von wenigstens 0,5 %, gemessen als Gew.-% P₂O₅, Folgendes umfassend:
Bereitstellen eines Presslinge enthaltenden Einsatzguts aus mineralischem Material,
Schmelzen des Einsatzguts in einem Ofen, um eine Schmelze bereitzustellen,
und Zerfasern der Schmelze, um Fasern auszubilden,
wobei die Presslinge ein nicht ursprüngliches Gesteinsmaterial umfassen, das wenigstens 2 % Phosphor umfasst, wobei das nicht ursprüngliche Gesteinsmaterial ausgewählt ist aus der Gruppe bestehend aus Klärschlammasche, Knochenmehlasche, granulierter Klärschlammschlacke und Gemischen derselben.

2. Verfahren nach Anspruch 1, wobei das nicht ursprüngliche Gesteinsmaterial wenigstens 3 % Phosphor umfasst.

3. Verfahren nach Anspruch 2, wobei das nicht ursprüngliche Gesteinsmaterial wenigstens 5 % Phosphor umfasst.

4. Verfahren nach einem vorangehenden Anspruch, wobei das nicht ursprüngliche Gesteinsmaterial Klärschlammasche umfasst.

5. Verfahren nach einem vorangehenden Anspruch, wobei das nicht ursprüngliche Gesteinsmaterial granulierte Klärschlammschlacke umfasst.

6. Verfahren nach einem vorangehenden Anspruch, wobei die Presslinge wenigstens 3 Gew.-%, vorzugsweise wenigstens 4 Gew.-%, stärker bevorzugt wenigstens 5 Gew.-% nicht ursprüngliches Gesteinsmaterial umfassen.

7. Verfahren nach einem vorangehenden Anspruch, wobei die Presslinge höchstens 25 Gew.-%, vorzugsweise höchstens 15 Gew.-%, stärker bevorzugt höchstens 10 Gew.-% nicht ursprüngliches Gesteinsmaterial umfassen.

8. Verfahren nach Anspruch 1, wobei es sich bei dem nicht ursprünglichen Gesteinsmaterial um granulierte Klärschlammschlacke handelt und die Presslinge höchstens 50 Gew.-% granulierte Klärschlammschlacke umfassen.

9. Verfahren nach Anspruch 1, wobei es sich bei dem nicht ursprünglichen Gesteinsmaterial um Klärschlammasche handelt und das Einsatzgut aus mineralischem Material 1 bis 25 %, vorzugsweise 4 bis 15 % Klärschlammasche, bezogen auf das Gewicht des Einsatzguts, enthält.

10. Verfahren nach einem vorangehenden Anspruch, wobei die Presslinge zusätzlich Mineralwollabfälle umfassen.

11. Verfahren nach einem vorangehenden Anspruch, wobei die Presslinge wenigstens zwei Tage vor ihrer Einbringung in das Einsatzgut hergestellt werden.

12. Verfahren nach einem vorangehenden Anspruch, wobei die Fasern weniger als 22 % Aluminium, vorzugsweise weniger als 17 %, am stärksten bevorzugt zwischen 10 und 15 % Aluminium, gemessen als Gew.-% Al₂O₃, umfassen.

13. Verfahren nach einem vorangehenden Anspruch, wobei die Fasern 0,5 bis 10 % Phosphor, vorzugsweise weniger als 5 % Phosphor, gemessen als Gew.-% P₂O₅, umfassen.

14. Verfahren nach Anspruch 13, wobei die Fasern wenigstens 1 %, vorzugsweise wenigstens 2 % Phosphor umfassen.

15. Verfahren nach einem vorangehenden Anspruch, wobei wenigstens 90 %, vorzugsweise wenigstens 92 %, stärker bevorzugt wenigstens 95 % des Phosphors in dem Einsatzgut in die Schmelze und die Fasern überführt werden.

16. Verfahren nach einem vorangehenden Anspruch, wobei der Ofen ein Schachtofen, vorzugsweise ein Kupolofen ist.

17. Verfahren nach Anspruch 16, wobei Eisen aus dem Ofen abgelassen wird und vorzugsweise in einer Eisengießerei wiederverwendet wird.

18. Verfahren nach einem vorangehenden Anspruch, wobei die Fasern weniger als 4 % Aluminium, gemessen als Gew.-% Al₂O₃, umfassen.

19. Verfahren nach einem vorangehenden Anspruch, das ein Formen der Fasern zu einem Produkt umfasst, bei dem es sich um ein Isolierprodukt, ein Wachstumssubstrat oder einen granulierten Füllstoff handelt.

20. Verfahren nach Anspruch 19, wobei das Produkt für die Schallisolierung oder den Brandschutz verwendet wird.

## Revendications

1. Processus de production de fibres vitreuses fabriquées par l'homme ayant une teneur en phosphore d'au moins 0,5 %, mesurée en pourcentage en poids de P₂O₅, comprenant les étapes suivantes
obtenir une charge de matière minérale contenant des briquettes,
faire fondre la charge dans un four afin d'obtenir une matière fondue,
et fibrer cette matière fondue afin de former des fibres,
dans lequel les briquettes contiennent une matière rocheuse non vierge contenant au moins 2 % de phosphore, la matière rocheuse non vierge étant choisie dans le groupe constitué de cendres de boues d'épuration, de cendres de poudre d'os, de laitier de boues d'épuration granulé et de mélanges de ces matières.

2. Processus selon la revendication 1 dans lequel la matière rocheuse non vierge contient au moins 3 % de phosphore.

3. Processus selon la revendication 2 dans lequel la matière rocheuse non vierge contient au moins 5 % de phosphore.

4. Processus selon l'une quelconque des revendications précédentes dans lequel la matière rocheuse non vierge contient des cendres de boues d'épuration.

5. Processus selon l'une quelconque des revendications précédentes dans lequel la matière rocheuse non vierge contient du laitier de boues d'épuration granulé.

6. Processus selon l'une quelconque des revendications précédentes dans lequel les briquettes contiennent au moins 3 % en poids, de préférence au moins 4 % en poids, et de manière encore plus préférable au moins 5 % en poids de matière rocheuse non vierge.

7. Processus selon l'une quelconque des revendications précédentes dans lequel les briquettes ne contiennent pas plus de 25 %, de préférence pas plus de 15 %, et de manière encore plus préférable pas plus de 10 %, en poids de matière rocheuse non vierge.

8. Processus selon la revendication 1 dans lequel la matière rocheuse non vierge est du laitier de boues d'épuration granulé et les briquettes ne contiennent pas plus de 50 % en poids de laitier de boues d'épuration granulé.

9. Processus selon la revendication 1 dans lequel la matière rocheuse non vierge est des cendres de boues d'épuration et la charge de matière minérale contient de 1 à 25 %, de préférence de 4 à 15 % de cendres de boues d'épuration, en poids de charge.

10. Processus selon l'une quelconque des revendications précédentes dans lequel les briquettes contiennent en outre des déchets de laine minérale.

11. Processus selon l'une quelconque des revendications précédentes dans lequel les briquettes sont produites au moins deux jours avant leur inclusion dans la charge.

12. Processus selon l'une quelconque des revendications précédentes dans lequel les fibres contiennent moins de 22 % d'aluminium, de préférence moins de 17 %, et de manière encore plus préférable entre 10 et 15 % d'aluminium, mesuré en pourcentage en poids d'Al₂O₃.

13. Processus selon l'une quelconque des revendications précédentes dans lequel les fibres contiennent de 0,5 à 10 % de phosphore, de préférence moins de 5 % de phosphore, mesuré en pourcentage en poids de P₂O₅.

14. Processus selon la revendication 13 dans lequel les fibres contiennent au moins 1 %, de préférence au moins 2 %, de phosphore.

15. Processus selon l'une quelconque des revendications précédentes dans lequel au moins 90 %, de préférence au moins 92 %, et de manière encore plus préférable au moins 95 %, du phosphore dans la charge est transféré dans la matière fondue et les fibres.

16. Processus selon l'une quelconque des revendications précédentes dans lequel le four est un four à cuve, de préférence un cubilot.

17. Processus selon la revendication 16 dans lequel le fer est soutiré du four et est de préférence réutilisé dans une fonderie de fer.

18. Processus selon l'une quelconque des revendications précédentes dans lequel les fibres contiennent moins de 4 % d'aluminium, mesuré en pourcentage en poids d'Al₂O₃.

19. Processus selon l'une quelconque des revendications précédentes comprenant la formation des fibres en un produit qui est un produit isolant, un substrat de croissance ou une charge granulée.

20. Processus selon la revendication 19 dans lequel le produit est utilisé pour l'isolation phonique ou la protection contre l'incendie.
